(19) Europäisches Patentamt
European Patent Office
Office européen des brevets

(11) **EP 3 845 100 A1**

(12) **EUROPEAN PATENT APPLICATION**

(43) Date of publication:
**07.07.2021 Bulletin 2021/27**

(21) Application number: **19220180.4**

(22) Date of filing: **31.12.2019**

(51) Int Cl.:
*A47J 43/04* (2006.01)   *A47J 43/042* (2006.01)
*G09B 19/00* (2006.01)   *G16H 20/60* (2018.01)
*A23L 2/02* (2006.01)   *A23L 2/60* (2006.01)
*A23L 2/68* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Koninklijke Philips N.V.**
**5656 AG Eindhoven (NL)**

(72) Inventors:
• **CHEN, Yun**
  **5656 AE Eindhoven (NL)**

• **WIJNOLTZ, Anna Louise**
  **5656 AE Eindhoven (NL)**
• **HOONHOUT, Henriette Christine Marie**
  **5656 AE Eindhoven (NL)**
• **DE VREEDE, Jasper**
  **5656 AE Eindhoven (NL)**

(74) Representative: **Philips Intellectual Property &
Standards
High Tech Campus 5
5656 AE Eindhoven (NL)**

(54) **FOOD PROCESSING APPARATUS AND METHOD**

(57)     A food processing apparatus (10) is disclosed comprising a food processing chamber (30) for preparing a fluid food product, said food processing chamber comprising a pH sensor (26) for determining the pH of said fluid food product; a processor (60) communicatively coupled to the pH sensor and a data source (29, 50, 80) for providing an indication of a sugar content of said fluid food product. The processor is adapted to receive a pH measurement from the pH sensor; estimate a titratable acidity of the fluid food product from the received pH measurement; receive the indication of the sugar content of said fluid food product from the data source; calculate a ratio of the indicated sugar content and estimated titratable acidity, said ratio providing an indication of a taste of said fluid food product; compare the calculated ratio with a target value for said ratio; and generate an output indicative of said comparison result. Also disclosed is a method for controlling the taste of a fluid food product for preparation in such a food processing apparatus.

FIG. 1

**Description**

FIELD OF THE INVENTION

The present invention relates to a food processing apparatus adapted to facilitate control of the taste of a fluid food product prepared with the food processing apparatus.

The present invention further relates to a method of controlling a taste of a fluid food product for preparation in such a food processing apparatus.

BACKGROUND OF THE INVENTION

There is an increasing awareness of the need to control sugar intake. Excessive sugar intake can lead to a plethora of health issues, including but not limited to caries (tooth decay), type-2-diabetes, overweight/obesity, and cardiovascular disease. However, limiting sugar intake can be challenging, as the presence of sugar in many food products, for example fluid food products such as smoothies or juices, enhances the flavor of the food product, in particular where natural ingredients containing organic acids, e.g. fruits, are used to produce or prepare the food product, where the addition of sugar counters the tartness of such food products caused by the presence of such organic acids therein.

Therefore, it is not straightforward to provide a food processing apparatus that can produce food products, e.g. fluid food products that have the desired taste to the consumer of the food product whilst at the same time protecting the consumer from excessive sugar intake. For this reason, many food processing apparatus manufacturers cooperate with third party nutritionists to provide the user of such food processing apparatuses with healthy recipes for preparing such food products, with such third parties responsible for controlling the nutrient content and flavor of the food products prepared in accordance with such recipes. Such a process is not particularly interactive, and can also be rather costly.

US 2013/0309373 A1 discloses a beverage preparation device including a plurality of storage chambers for storing several ingredients having each a different taste property, a user interface for receiving data representing a user's preferred taste, a taste management unit and a generator. The taste management unit includes a memory for storing a reference table which describes the taste property of each ingredient and a processor for determining the dosage of each ingredient to be used according to the reference table and the user's preferred taste. The generator generates beverages from the several ingredients according to the determined dosage. This device can provide beverages according to the user's desired taste, but does not provide control over the sugar content of such beverages.

SUMMARY OF THE INVENTION

The present invention seeks to provide a food processing apparatus that can produce a fluid food product having the desired taste whilst providing control over the sugar content of the fluid food product.

The present invention further seeks to provide a method of controlling a taste of a fluid food product for preparation in such a food processing apparatus.

According to an aspect, there is provided a food processing apparatus comprising a food processing chamber for preparing a fluid food product, said food processing chamber comprising a pH sensor for determining the pH of said fluid food product; a processor communicatively coupled to the pH sensor and a data source for providing an indication of a sugar content of said fluid food product, the processor being adapted to receive a pH measurement from the pH sensor; estimate the titratable acidity of the fluid food product from said pH measurement, receive the indication of the sugar content of said fluid food product from the data source; calculate a ratio of the indicated sugar content and the estimated titratable acidity, said ratio providing an indication of a taste of said fluid food product; compare the calculated ratio with a target value for said ratio; and generate an output indicative of said comparison result.

The present invention is based on the knowledge that the ratio of sugar content, e.g. Brix value, and titratable acidity of the fluid food product provides a reliable indication of the perceived sweetness or flavor of the fluid food product. Therefore, by measuring the pH of the fluid food product, estimating the titratable acidity of the fluid food product from said pH measurement and obtaining an indication of the sugar content of the fluid food product from a data source, the flavor of the fluid food product may be estimated by calculation of this ratio. Moreover, the comparison of the calculated ratio against a target value of this ratio, e.g. a target value indicative of a user preference of the flavor of the fluid food product, it can be predicted if the fluid food product has the desired taste to the user or consumer of the fluid food product. The output indicative of the comparison result may be used to inform the user about whether the prepared fluid food product is expected to have the desired taste, such that the user may adjust the recipe of the fluid food product if necessary to avoid the processing of a fluid food product that will not meet flavor expectations.

Preferably, said output further comprises a recommended adjustment of a composition of said fluid food product for adjusting said calculated ratio if the calculated ratio differs from the target value such that the user can adjust the recipe in a nutritionally responsible manner, e.g. by recommending adjustments to the composition of the fluid food product that would avoid (significantly) increasing its sugar content.

For example, the recommended adjustment of the composition of said fluid food product for adjusting said calculated ratio may comprise at least one of an adjustment of an amount of an ingredient of said fluid food product and an addition of a new ingredient to said fluid food product, e.g. an ingredient that does not significantly increase the overall sugar content of the fluid food product. The recommended adjustment of the composition of said fluid food product by addition of a new ingredient to said fluid food product may comprise a list of candidate ingredients for selection by a user of the food processing apparatus such that the user may select an ingredient from the list based on the user's taste preference for instance.

In an embodiment, the food processing chamber comprises a Brix sensor communicatively coupled to the processor and arranged to act as said data source. This has the advantage that the food processing apparatus can determine the actual ratio of the sugar content and titratable acidity of the fluid food product in a self-contained manner, thereby providing a particularly useful food processing apparatus.

In an alternative embodiment, the food processing apparatus further comprises a weight sensor communicatively coupled to the processor and arranged to weight the contents of the food processing chamber, wherein the processor is adapted to receive the indication of the sugar content of said fluid food product from the data source by receiving a list of ingredients of the fluid food product including a unit sugar content for each of said ingredients from the data source; receiving a weight of each ingredient introduced into the food processing chamber from the weight sensor and calculating the sugar content of said fluid food product from the respective unit sugar contents and weights of the ingredients introduced into the food processing chamber. This has the advantage that the actual sugar content of the fluid food product does not require measuring but instead may be derived from the specified unit sugar content and measured weight of its ingredients, which may be a particularly cost-effective implementation of such a food processing apparatus.

The food processing apparatus may further comprise a communication module communicatively coupled to the processor, wherein the processor is adapted to receive the indication of the sugar content of said fluid food product from the data source through the communication module. This for instance facilitates receiving the indication of the sugar content of said fluid food product from a separate device such as a mobile communication device, e.g. a smart phone, tablet computer or the like, which can be perceived as particularly user-friendly. The processor may be further adapted to cause the communication module to send the generated output to the data source in communication with the communication module such that the user can receive and interpret this output on this data source, e.g. on the separate device.

The processor may be further adapted to receive an indication of the taste of the fluid food product upon its preparation with the food processing apparatus and to adjust the target value based on said indication.

This learning mode of the food processing apparatus improves its accuracy, e.g. by allowing a user to indicate whether a prepared fluid food product was too sweet or too tart, such that the target value for its sugar content and titratable acidity ratio may be adjusted accordingly.

The food processing apparatus may further comprise a user interface including a display device communicatively coupled to the processor, wherein the processor is adapted to control the user interface such as to display the generated output on said display device. This provides a food processing apparatus that can be used by a user in a standalone manner, e.g. without requiring the use of a separate device to evaluate the output produced by the food processing apparatus.

In the foregoing embodiments, the target value may comprise a range of target values such that the expected taste of the fluid food product in preparation is considered acceptable as long as the ratio of its sugar content and titratable acidity lies within the range of target values, such that adjustments to the composition of the fluid food product are required less frequently.

In example embodiments, the food processing apparatus is a juicer or a blender. However, the food processing apparatus may take any suitable shape.

According to another aspect, there is provided a method of controlling a taste of a fluid food product for preparation in a food processing apparatus comprising a food processing chamber for preparing the fluid food product, said food processing chamber comprising a pH sensor for determining a pH of said fluid food product and a processor communicatively coupled to the pH sensor and a data source for providing an indication of a sugar content of said fluid food product, the method comprising, with said processor, receiving a pH measurement from the pH sensor; estimating a titratable acidity of the fluid food product from the received pH measurement; receiving the indication of the sugar content of said fluid food product from the data source; calculating a ratio of the indicated sugar content and estimated titratable acidity, said ratio providing an indication of a taste of the fluid food product; comparing the calculated ratio with a target value for said ratio; and generating an output indicative of said comparison result, optionally wherein said output further comprises a recommended adjustment of a composition of said fluid food product for adjusting said calculated ratio if the calculated ratio differs from the target value. In this manner, both the overall taste and sugar content of the fluid food product can be controlled, thereby providing a fluid food product that can be both healthy in terms of limited sugar content and tasty.

The method may further comprise preparing the fluid food product with the food processing apparatus; receiving an indication of the taste of the prepared fluid food product; and adjusting the target value based on said indication. Through this learning mode, the accuracy of the taste prediction of the fluid food product can be further improved.

In an embodiment, the food processing apparatus further comprises a weight sensor communicatively coupled to the processor and arranged to weight the contents of the food processing chamber, wherein receiving the indication of the sugar content of said fluid food product from the data source comprises receiving a list of ingredients of the fluid food product including a unit sugar content for each of said ingredients from the data source; receiving a weight of each ingredient introduced into the food processing chamber from the weight sensor; and calculating the sugar content of said fluid food product from the respective unit sugar contents and weights of the ingredients introduced into the food processing chamber. By calculating the sugar content of the fluid food product in this manner, actual measurement of this sugar content is not required, which may make the method more straightforward and cost-effective to implement.

BRIEF DESCRIPTION OF THE DRAWINGS

Embodiments of the invention are described in more detail and by way of non-limiting examples with reference to the accompanying drawings, wherein:

Fig. 1 schematically depicts a cross-sectional view of a food processing apparatus according to an embodiment;
Fig. 2 depicts a flowchart of a method of controlling a taste of a fluid food product to be prepared in a food processing apparatus according to an embodiment;
Fig. 3 schematically depicts a cross-sectional view of a food processing apparatus according to another embodiment;
Fig. 4 depicts a flowchart of a method of controlling a taste of a fluid food product to be prepared in a food processing apparatus according to another embodiment; and
Fig. 5 depicts an optional aspect of the methods according to any of the herein described embodiments.

DETAILED DESCRIPTION OF THE EMBODIMENTS

It should be understood that the Figs are merely schematic and are not drawn to scale. It should also be understood that the same reference numerals are used throughout the Figs to indicate the same or similar parts.
Many food products, e.g. fruits or vegetables, contain organic acids such as citric acid (e.g. figs, pomegranates, passionfruit, blueberries, pineapple, oranges, apricots, guava, papaya, strawberries, raspberries, lemon, lime and so on), malic acid (e.g. lychee, cherry, banana, apple, plum, pear, peach, grapes, nectarines, avocados, and so on) or tartaric acid (e.g. grapes). In order to produce a food product having an amenable taste, sweeteners such as sugar or honey are typically added to the food product in order to compensate for the tartness of such organic acids. Embodiments of the present invention are based on the knowledge that individual parameters such as titratable acidity and sugar content of a food product, e.g. a fluid food product such as a smoothie or juice, are poor indicators of the expected taste of such a food product. For example, a relatively high titratable acidity does not necessarily correspond to the food product having a tart or acidic flavor, for example because of high sugar content in the food product. Similarly, a food product having a high sugar content does not necessarily have a sweet taste, for example because of a high acid content (titratable acidity) of the food product.
However, the ratio R of sugar content and ratio, e.g. R = [Brix]/[TA], in which [Brix] is the estimated or measured Brix value of the food product and [TA] is the estimated titratable acidity of the food product has been found to provide an accurate indication of the perceived taste of the food product by a consumer. For the sake of completeness, Brix (°Bx) may be expressed as the sugar content of an aqueous solution, in which 1° Bx corresponds to 1 gram of sucrose per 100 grams of solution. Where other types of sugar, e.g. fructose, glucose and so on, are included in the aqueous solution, the Brix value approximates the dissolved sugar content. Of course, other parameters for expressing the sugar content of such a food product may be used in the ratio R as well, such as the degree Plato for example. Similarly, the titratable acidity (TA) may be expressed in grams of acid per liter of fluid food product, or in any other suitable dimension. Moreover, the ratio R may be expressed in any suitable manner, e.g. R = [Brix]/[TA] or R' = [TA]/[Brix].
Hence, by calculation of the ratio R of a particular food product, e.g. a fluid food product such as a smoothie or juice, the taste or sweetness of this food product can be estimated, and compared against a target taste, e.g. a target value of the ratio R, to determine whether the food product with the calculated ratio R has a desired taste for a consumer. To this end, the target value of the ratio R may be expressed as a single value or as a range of values. The latter has the advantage that the calculated ratio R of the food product is more likely to be deemed acceptable (as it is more likely for the calculated ratio R to lie within a range of target values than to equal a single target value) such that the consumer is less often required to make adjustments to the formulation or composition of the food product such as to counter the discrepancy between the calculated value of the ratio R and the target value of this ratio. Alternatively, a calculated ratio R may be considered acceptable if the calculated value of this ratio deviates from a target value by less than a defined amount, e.g. 10% by way of non-limiting example, which of course in essence equates to defining a range of acceptable values for the calculated ratio R relative to its target value.

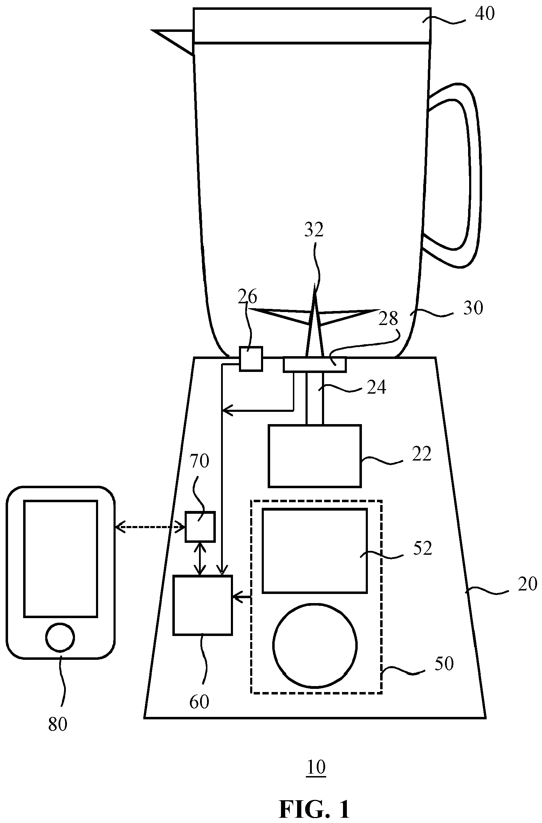

Fig. 1 schematically depicts a food processing apparatus 10 according to an embodiment of the present invention. The food processing apparatus 10 may take any suitable shape, e.g. a kitchen appliance for processing food, in particular liquidized or fluid food products such as smoothies, juices or the like. In example embodiments, the food processing apparatus 10 is a blender, mixer or juicer although it should be understood that embodiments of the invention are not limited thereto. The food processing apparatus 10 comprises a food processing chamber 30, which typically comprises a blade arrangement 32 to grind, macerate or otherwise cut or blend food products. The blade arrangement 32 may be detachable from the food processing chamber 30, e.g. in order to facilitate cleaning of the blade arrangement 32. The food processing chamber 30 may take any suitable form, such as for example a glass or plastic jug or bowl that may be hermetically sealed by a lid 40. The blade arrangement 32 is driven by a motor 22 under control of a processor 60, which may be housed in a base 20 of the food processing apparatus 10. The motor 22 may be coupled to the blade arrangement in any suitable manner, e.g. through a drive axle or shaft 24, gear box and so on. Such types of couplings are well-known per se and are therefore not explained in further detail for the sake of brevity only. The processor 60 may be any suitable control arrangement comprising one or more physical entities implementing such a control arrangement.

The food processing apparatus 10 further comprises a pH sensor 26 within or coupled to the food processing chamber 30. The pH sensor 26 is communicatively coupled to the processor 60. The pH sensor 26 is arranged to measure the pH (i.e. a degree or strength of acidity or alkalinity) of a food product such as a fluid food product within the food processing chamber 30. Any suitable embodiment of such a pH sensor 26 may be used for this purpose. As such pH sensors are well-known per se, this will not be explained in further detail for the sake of brevity.

The food processing apparatus 10 further comprises a weight sensor 28 for weighing the contents of the food processing chamber 30. For example, the weight sensor 28 may be embodied by scales or the like. The weight sensor 28 is communicatively coupled to the processor 60 such that a weight measurement by the weight sensor 28 of a food product ingredient added to the food processing chamber 30 by a user may be communicated to the processor 60.

The processor 60 may be responsive to a user interface 50 through which the food processing apparatus 10 may be controlled, e.g. by a user selecting the mode of operation in which the food product within the food processing chamber 30 is to be processed. Such a user interface 50 may form part of the food processing apparatus 10, in which case the user interface 50 may be implemented in any suitable manner, e.g. as a touchscreen display, one or more switches, buttons, knobs or dials, and so on, or any combination of such user interface elements. The user interface 50 for example may be located on the base 20 of the food processing apparatus 10 or in any other suitable location thereon. The food processing apparatus 10 may further comprise a sensory output device 52 responsive to the processor 60 through which the processor 60 may cause the generation of a sensory output, e.g. an audible or visible output, for example to signal an indication of the taste of the processed food product in the food processing chamber 30. Such a sensory output device 52 may take any suitable shape, e.g. a speaker, one or more lights such as LEDs, a display, and so on. The sensory output device 52 may form part of the user interface 50 although this is not necessarily the case.

Alternatively or additionally, a user interface for the food processing apparatus 10 may be implemented on a remote device 80, e.g. by way of a software program such as an app, through which the food processing apparatus 10 may be remotely controlled. For example, such a remote device 80 may be a computing device, a mobile communication device such as a smart phone, a tablet computer, a remote controller, and so on. In embodiments in which the user interface 50 is implemented on such a remote device, the food processing apparatus 10 typically further comprises a communication module 70 communicatively coupled to the processor 60, preferably a wireless communication module through which the remote device may communicate with the food processing apparatus 10. Such a communication link may be a direct (P2P) link such as a Bluetooth link or the like, or may be an indirect link running through a communication management device such as a server, router or the like. As the technology involved with such communication links is well-known per se, this will not be explained in further detail for the sake of brevity only.

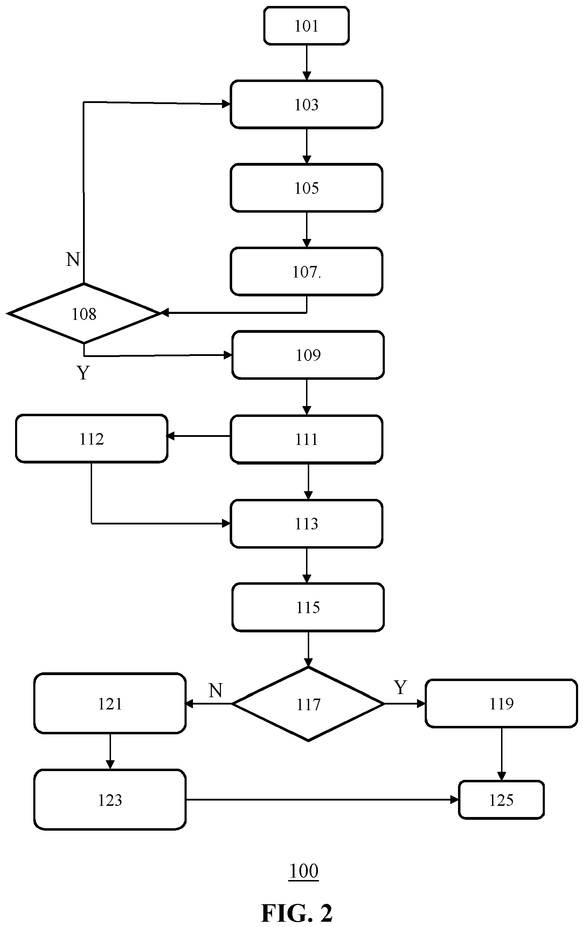

The operation of the food processing apparatus 10 in accordance with an embodiment of the present invention will now be explained in more detail with the aid of Fig. 2, which depicts a flowchart of a method 100 for controlling the taste of a fluid food product to be prepared in the food processing apparatus 10. The method 100 starts in operation 101, for example by switching on the food processing apparatus 10. The method 100 then proceeds to operation 103 in which the processor 60 of the food processing apparatus 10 receives a specification of an ingredient of the (fluid) food product to be prepared with the food processing apparatus 10, e.g. through the user interface 50 or the remote device 80, such as a particular type of fruit or vegetable, a liquid such as yoghurt, milk or water, and so on. In an embodiment, the ingredient forms part of a (personalized) food product recipe library stored on the food processing apparatus 10 or the remote device 80, such that the processor 60 of the food processing apparatus 10 is presented with a list of ingredients corresponding to such a recipe being selected by the consumer or user from this library in any suitable manner.

In a further refinement, a degree of ripeness of the ingredient may be specified, as this can influence the unit sugar content of the ingredient of the food product. In operation 105, the processor 60 obtains a typical unit sugar content of the ingredient specified in operation 103, e.g. from the user interface 50 or the remote device 80, or from a database (not shown) storing such unit sugar contents of ingredients. Such a database may form part of the food processing apparatus 10, e.g. may be stored in a data storage device such as a memory or the like, or such a database may be accessed by the processor 60 through a data communication network such as the Internet to which the food processing apparatus 10 is connected, e.g. through the data communication module 70. Such a unit sugar content may be expressed in any suitable manner, e.g. in grams of sugar per 100 grams of ingredient or the like.

Next, upon receiving an indication through the user interface 50 or the remote device 80 that a specified ingredient has been added to the food processing chamber 30, the processor 60 controls the weight sensor 28 in operation 107 to determine the actual amount of the specified ingredient that has been added to the food processing chamber 30 such that the actual amount of sugar added to the food processing chamber 30 by the specific ingredient can be calculated, e.g. [S] = [W]/ U, in which [S] is the actual amount of sugar added, [W] is the determined weight of the amount of specific ingredient added and U is the unit sugar content of the specific ingredient. As will be readily understood by the skilled person, operations 103, 105 and 107 may be performed in any suitable sequence.

This process is repeated as indicated by operation 108 until all ingredients of a particular food product have been specified and weighed, after which the method 100 proceeds to operation 109 in which the processor 60 calculates the overall sugar content of the food product in the food processing chamber 30. Preferably, the processor 60 calculates the Brix value of the food product in the food processing chamber 30. To this end, the processor 60 may deploy the following equation, for the N ingredients of the food product (in which N is a positive integer typically having a value of at least 2):

$$Brix(\%) = (\sum_{i=1}^{N} \frac{W_i}{U_i} / \sum_{i=1}^{N} W_i) * 100\%$$

In operation 111, the processor 60 operates the pH sensor 26 to determine the pH of the food product and estimates the titratable acidity of the food product from its determined pH in operation 112, after which in operation 113 the processor 60 calculates the ratio R, e. g. expressed as [Brix]/[TA] as previously explained in order to obtain an indication of a taste, e.g. a sweetness, of the food product prepared with the food processing apparatus 10. Of course, operations 109 and 111/112 may be interchanged or performed concurrently as will be immediately apparent to the skilled person. Typically, operation 111 is performed following preparation of the food product with the food processing apparatus 10. The titratable acidity of the food product may be estimated from the determined pH in any suitable manner, for example using empirical models in which the relationship between pH and titratable acidity of particular food products and/or ingredients has been captured. Such empirical models may be developed using routine experimentation and are therefore not discussed in further detail for the sake of brevity only.

In operation 115, the processor 60 compares the calculated ratio R against a target value, e.g. a single value or a range of values as previously explained, in order to assess whether the estimated taste or flavor of the food product as expressed by the ratio R corresponds to a desired taste or flavor of the food product as expressed by the target value. The target value may be user-defined in any suitable manner, or may be a factory setting. As will be explained in more detail below, the target value may be adjustable, e.g. to update a factory setting such that the target value becomes a more accurate reflection of the personal taste of the consumer of the food product.

In operation 117, the processor 60 checks if the calculated value of the ratio R matches the target value of this ratio. If this is the case, the processor generates an output signal in operation 119 for informing the consumer of the food product that the expected taste of the food product is in line with its desired taste as expressed by the target value of the ratio R, such that the consumer may consume the food product without altering its composition to alter its taste, e.g. by adjustment of the titratable acidity and/or sugar content of the food product. Alternatively, if this is not the case, the processor generates an output signal in operation 121 for informing the consumer of the food product that the expected taste of the food product is not in line with its desired taste as expressed by the target value of the ratio R, such that the consumer may alter its composition to alter its taste, e.g. by adjustment of the pH and/or sugar content of the food product prior to consumption of the food product. This output signal may be differentiated based on the difference between the calculated value of the ratio R and its target value, e.g. the output signal may indicate that the food product is expected to be too sweet or too acidic based on the calculated difference in order to allow the consumer to adjust the composition of the food product in an appropriate manner, e.g. to adjust the titratable acidity and/or sugar levels of the food product. The processor 60 may generate such outputs in any suitable form, e.g. as a control signal for the sensory output device 52 or for a sensory output device of the remote device 80, such that the user may be informed of the comparison result accordingly.

In a preferred embodiment, the method 100 further comprises optional operation 123 in which the output produced in operation 123 is enhanced with a recommended adjustment of the composition of the food product for adjusting the calculated value of the ratio R such as to reduce the difference between the calculated value of the ratio R and its target value, e.g. to reduce the acidity of the food product and/or increase its sweetness, e.g.

by proposing the adjustment of an amount of an ingredient of the prepared food product and/or the addition of a supplementary ingredient to the prepared food product. To this end, the processor 60 may have access to a library of supplementary ingredients such as water, yoghurt, sugar, honey, fruits, vegetables and so on, from which one or more supplementary ingredients may be selected for inclusion in the output for adjusting the composition of the food product based on the difference between the calculated value of the ratio R and its target value.

The processor 60 may further recommend an amount or weight for each supplementary ingredient to be added to the food product in the food processing chamber 30. In a further refinement, the supplementary ingredients further may be selected from such a library based on a known compatibility with the specified ingredients of the food product. Such an output augmented with supplementary ingredients for adjusting the taste or flavor of the food product may be presented to the consumer or user in any suitable manner, e.g. through the user interface 50 or the remote device 80, such that the consumer or user may select one or more of such supplementary ingredients from a presented list of candidate supplementary ingredients for addition to the food product in the food processing chamber 30, after which the food product may be further processed with the food processing apparatus 10, and an adjusted ratio R may be calculated in accordance with method 100 as will be immediately apparent to the skilled person. Upon completion of the processing of the food product with the food processing apparatus 10, the method 100 terminates in operation 125.

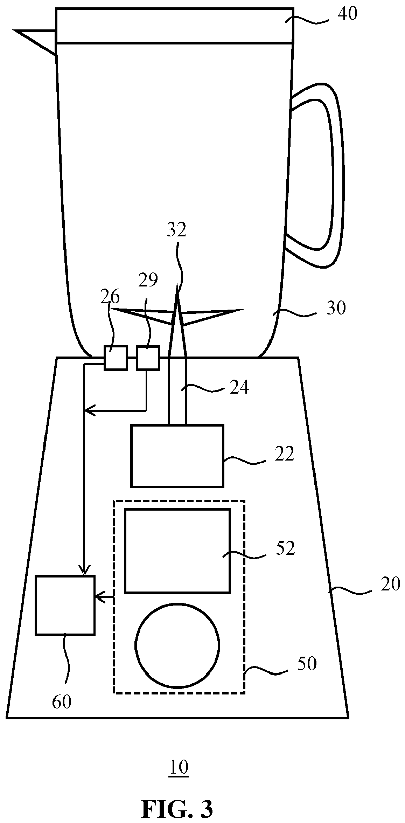

Fig. 3 schematically depicts an alternative embodiment of the food processing apparatus 10, in which the food processing apparatus 10 further comprises a Brix sensor 29 for sensing the Brix value of the food product in the food processing chamber 30, which Brix sensor is communicatively coupled to the processor 60. In other words, the Brix sensor 29 acts as the data source for providing an indication of a sugar content of the food product prepared with the food processing apparatus 10. In this embodiment, the consumer or user does not need to specify the ingredients or recipe of the food product, nor does the food processing apparatus 10 require to weigh the individual ingredients of the food product, such that the weight sensor 28 may be omitted. The Brix sensor 29 may be implemented in any suitable manner, e. g. as a refractometer or the like. As such implementations are well-known per se, this will not be explained in further detail for the sake of brevity only.

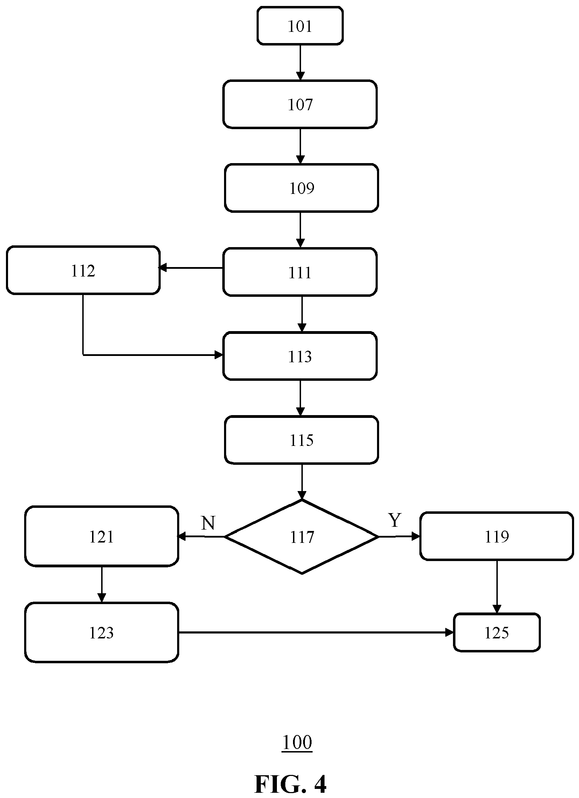

Consequently, the method 100 may be adjusted as schematically depicted in the flowchart of Fig. 4, in which operations 103 and 105 are omitted. Instead, upon initiating the method 100 in operation 101, the method 100 proceeds directly to operation 107 in which the ingredients of the food product are received in the food processing chamber 30 and the food product is prepared after which the Brix value of the prepared food product is measured with the Brix sensor 29 in operation 109 and the pH of the prepared food product is measured with the pH sensor 26 in operation 111 and the titratable acidity is estimated in operation 112, after which the method 100 proceeds to operation 113 as previously explained. From this point, this embodiment of the method 100 may be substantially identical to the previously described embodiment of the method 100 as depicted by the flowchart in Fig. 2, such that this detailed description will not be repeated for the sake of brevity only. It is however noted that in case the processor 60 is to recommend amounts of supplementary ingredients to be added to the prepared food product in case the calculated value of the ratio R deviates from its target value, the total weight of the food product ideally should be known, in which case the weight sensor 28 may still be present in the design of the food processing apparatus 10. Alternatively, the processor 60 may recommend the addition of an amount of a supplementary ingredient as a proportion of the total weight of the prepared food product, in which case the consumer or user may calculate the actual weight of the supplementary ingredient to be added if the consumer or user has knowledge of the total weight of the prepared food product.

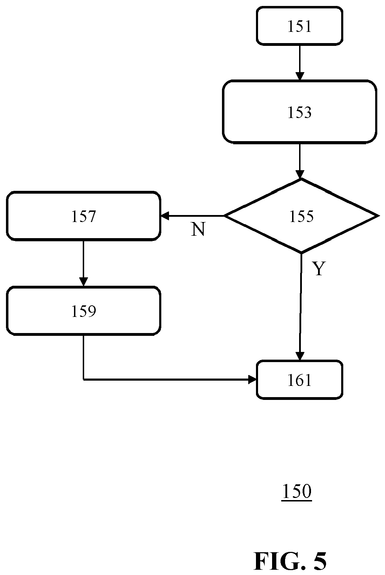

In an embodiment, the food processing apparatus 10 is operable in a learning mode in which a user of the food processing apparatus 10, e.g. a consumer of a food product prepared with the food processing apparatus 10, may provide feedback as to the accuracy of the target value of the ratio R with regards to the personal taste of the user, as will be explained in more detail with the aid of Fig. 5, in which a flowchart of a method 150 of providing such feedback is depicted. The method 150 starts in operation 151, for example by the user engaging the learning mode of the food processing apparatus 10, e.g. through its user interface 50 or with the aid of the remote device 80. The user may typically engage the learning mode of the food processing apparatus 10 upon completion of the preparation of the food product with the food processing apparatus 10 and tasting by the user of the thus prepared food product. In operation 153, the processor 60 of the food processing apparatus 10 receives feedback of the user indicative of the taste of the food product as received by the user, with the processor 60 evaluating this feedback in operation 155. For example, if the processor 60 determines that the user feedback indicates that the taste of the prepared food product was acceptable to the user, the processor 60 may conclude that target value of the ratio R for the food product corresponds to the personal taste of the user, such that no adjustment of this target value is required. Consequently, the method 150 may proceed directly to operation 161 in which the method 150 terminates.

On the other hand, if the processor 60 determines in operation 155 that the user has indicated that the taste of the prepared food product is unacceptable or unpalatable, e.g. the user has indicated that the prepared food product is too sweet or too acidic, the processor 60 in operation 157 adjusts the target value of the ratio R of the food product in accordance with the received user feedback, e.g. by adjusting a single target value or one or both end points of a range of target values of the ratio R based on the received user feedback and stores the adjusted target value of the ratio R, e.g. in a memory device (not shown) or the like. In addition, the processor 60 in operation 159 may adjust a recipe from the recipe library according to which the food product was prepared, such as to personalize the recipe based on the user feedback. Such adjustments may include any one of the adjustment of amounts of an ingredient, replacement of an ingredient with at least one alternative ingredient and the addition of a supplementary ingredient to the recipe, after which the personalized recipe may be stored in the library prior to the method 150 terminating in operation 161.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A food processing apparatus (10) comprising:

    a food processing chamber (30) for preparing a fluid food product, said food processing chamber comprising a pH sensor (26) for determining the pH of said fluid food product;
    a processor (60) communicatively coupled to the pH sensor and a data source (29, 50, 80) for providing an indication of a sugar content of said fluid food product, the processor being adapted to:

        r receive a pH measurement from the pH sensor;
        estimate a titratable acidity of the fluid food product from the received pH measurement;
        receive the indication of the sugar content of said fluid food product from the data source;
        calculate a ratio of the indicated sugar content and estimated titratable acidity, said ratio providing an indication of a taste of said fluid food product;
        compare the calculated ratio with a target value for said ratio; and
        generate an output indicative of said comparison result.

2. The food processing apparatus (10) of claim 1, wherein said output further comprises a recommended adjustment of a composition of said fluid food product for adjusting said calculated ratio if the calculated ratio differs from the target value.

3. The food processing apparatus (10) of claim 2, wherein the recommended adjustment of the composition of said fluid food product for adjusting said calculated ratio comprises at least one of an adjustment of an amount of an ingredient of said fluid food product and an addition of a new ingredient to said fluid food product.

4. The food processing apparatus (10) of claim 3, wherein the recommended adjustment of the composition of said fluid food product by addition of a new ingredient to said fluid food product comprises a list of candidate ingredients for selection by a user of the food processing apparatus.

5. The food processing apparatus (10) of any of claims 1-4, wherein the food processing chamber (30) comprises a Brix sensor (29) communicatively coupled to the processor (60) and arranged to act as said data source.

6. The food processing apparatus (10) of any of claims 1-4, further comprising a weight sensor (28) communicatively coupled to the processor (60) and arranged to weight the contents of the food processing chamber (30), and wherein the processor is adapted to receive the indication of the sugar content of said fluid food product from the data source (50, 80) by:

    receiving a list of ingredients of the fluid food product including a unit sugar content for each of said ingredients from the data source;
    receiving a weight of each ingredient introduced into the food processing chamber from the weight sensor; and
    calculating the sugar content of said fluid food product from the respective unit sugar contents and weights of the ingredients introduced into the food processing chamber.

7. The food processing apparatus (10) of claim 6, further comprising a communication module (70) communicatively coupled to the processor (60), wherein the processor is adapted to receive the indication of the sugar content of said fluid food product from the data source (80) through the communication module.

8. The food processing apparatus (10) of claim 7, wherein the processor (60) is further adapted to cause the communication module (70) to send the generated output to the data source (80) in communication with the communication module.

9. The food processing apparatus (10) of any of claims 1-8, wherein the processor (60) is further adapted to receive an indication of the taste of the fluid food product upon its preparation with the food processing apparatus and to adjust the target value based on said indication.

10. The food processing apparatus (10) of any of claims 1-9, further comprising a user interface (50) including a display device (52) communicatively coupled to the processor (60), wherein the processor is adapted to control the user interface such as to display the generated output on said display device.

11. The food processing apparatus (10) of any of claims 1-10, wherein said target value comprises a range of target values.

12. The food processing apparatus (10) of any of claims 1-11, wherein the food processing apparatus is a juicer or a blender.

13. A method (100) of controlling a taste of a fluid food product for preparation in a food processing apparatus (10) comprising a food processing chamber (30) for preparing the fluid food product, said food processing chamber comprising a pH sensor (26) for determining a pH of said fluid food product and a processor (60) communicatively coupled to the pH sensor and a data source (29, 50, 80) for providing an indication of a sugar content of said fluid food product, the method comprising, with said processor:

    receiving (111) a pH measurement from the pH sensor;
    estimating (112) a titratable acidity of the fluid food product from the received pH measurement;
    receiving (109) the indication of the sugar content of said fluid food product from the data source;
    calculating (113) a ratio of the indicated sugar content and estimated titratable acidity, said ratio providing an indication of a taste of the fluid food product;

    comparing (115) the calculated ratio with a target value for said ratio; and
    generating (119, 121) an output indicative of said comparison result, optionally wherein said output further comprises a recommended adjustment of a composition of said fluid food product for adjusting said calculated ratio if the calculated ratio differs from the target value.

14. The method (100) of claim 13, further comprising:

    preparing the fluid food product with the food processing apparatus;
    receiving (153) an indication of the taste of the prepared fluid food product; and
    adjusting (157) the target value based on said indication.

15. The method (100) of claim 13 or 14, the food processing apparatus (10) further comprising a weight sensor (28) communicatively coupled to the processor (60) and arranged to weight the contents of the food processing chamber (30), and wherein receiving the indication of the sugar content of said fluid food product from the data source (50, 80) comprises:

    receiving (103) a list of ingredients of the fluid food product including a unit sugar content for each of said ingredients from the data source;
    receiving (107) a weight of each ingredient introduced into the food processing chamber from the weight sensor; and
    calculating (109) the sugar content of said fluid food product from the respective unit sugar contents and weights of the ingredients introduced into the food processing chamber.

40

32

26

28

30

24

70

22

52

20

50

60

80

10

**FIG. 1**

100

FIG. 2

40

32

29

26

30

24

22

52

20

50

60

10

**FIG. 3**

100

FIG. 4

150

**FIG. 5**

Europäisches
Patentamt

European
Patent Office

Office européen
des brevets

# EUROPEAN SEARCH REPORT

Application Number

EP 19 22 0180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/114813 A1 (BIPPERT DOUGLAS A [US] ET AL) 10 May 2012 (2012-05-10) | 1-11, 13-15 | INV. A47J43/04 |
| Y | * paragraphs [0015], [0052], [0060], [0063], [0064], [0101], [0103], [0104], [0108] - [0110]; claims 1-24 * | 12 | A47J43/042 G09B19/00 G16H20/60 A23L2/02 |
| Y | Anonymous: "Amazon.com: NutriBullet Balance, Bluetooth Enabled Smart Blender: Kitchen & Dining", , 2 November 2017 (2017-11-02), XP055666248, Retrieved from the Internet: URL:https://www.amazon.com/NutriBullet-Balance-Bluetooth-Enabled-Blender/dp/B0773P3WN5?th=1 [retrieved on 2020-02-07] | 12 | A23L2/60 A23L2/68 |
| A | * the whole document * | 1-11, 13-15 | |
| Y | Anonymous: "Ascent Series A3500 - Smart System Blenders ¦ Vitamix", , 1 January 2017 (2017-01-01), XP055666238, Retrieved from the Internet: URL:https://www.vitamix.com/us/en_us/shop/a3500 [retrieved on 2020-02-07] | 12 | |
| A | * the whole document * | 1-11, 13-15 | |
| Y | US 2015/305564 A1 (JIMENEZ ROLANDO ANTONIO CAVAZOS [US] ET AL) 29 October 2015 (2015-10-29) | 12 | |
| A | * claims 1-20; figures 1-8 * | 1-11, 13-15 | |

-/--

TECHNICAL FIELDS SEARCHED (IPC)

A47J
G16H
G09D
G09B
A23L

The present search report has been drawn up for all claims

| Place of search | Date of completion of the search | Examiner |
|---|---|---|
| The Hague | 20 May 2020 | De Jong, Ellen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 19 22 0180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/323879 A1 (SUN WEN [CN] ET AL) 24 October 2019 (2019-10-24) * paragraphs [0017], [0031], [0051], [0055], [0072], [0081], [0083] - [0086] * | 1-15 | |
| A | US 2019/286284 A1 (ROBBERECHTS DRIES [BE] ET AL) 19 September 2019 (2019-09-19) * paragraphs [0030], [0032], [0045], [0073], [0075], [0101], [0102], [0146], [0214], [0215]; claims 1-23 * | 1-15 | |
| A | EP 3 566 625 A1 (KONINKLIJKE PHILIPS NV [NL]) 13 November 2019 (2019-11-13) * paragraphs [0043], [0044], [0079], [0085] - [0092]; claims 1-15 * | 1-15 | |
| A | US 2017/035249 A1 (DICKSON JR THOMAS D [US] ET AL) 9 February 2017 (2017-02-09) * claims 1-30; figures 1-13 * | 1-15 | |
| A,D | US 2013/309373 A1 (TAN JINGWEI [CN] ET AL) 21 November 2013 (2013-11-21) * the whole document * | 1-15 | TECHNICAL FIELDS SEARCHED (IPC) |

The present search report has been drawn up for all claims

| Place of search | Date of completion of the search | Examiner |
|---|---|---|
| The Hague | 20 May 2020 | De Jong, Ellen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 19 22 0180

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2020

| Patent document cited in search report | | Publication date | Patent family member(s) | Publication date |
|---|---|---|---|---|
| US 2012114813 | A1 | 10-05-2012 | BR 112013011047 A2 | 23-08-2016 |
| | | | CN 103548048 A | 29-01-2014 |
| | | | CN 110929992 A | 27-03-2020 |
| | | | EP 2636012 A1 | 11-09-2013 |
| | | | US 2012114813 A1 | 10-05-2012 |
| | | | WO 2012096712 A1 | 19-07-2012 |
| US 2015305564 | A1 | 29-10-2015 | AU 2015229048 A1 | 06-10-2016 |
| | | | CA 2942683 A1 | 17-09-2015 |
| | | | CN 106687016 A | 17-05-2017 |
| | | | EP 3116360 A1 | 18-01-2017 |
| | | | US 2015305564 A1 | 29-10-2015 |
| | | | WO 2015138961 A1 | 17-09-2015 |
| US 2019323879 | A1 | 24-10-2019 | CN 110087485 A | 02-08-2019 |
| | | | EP 3555781 A1 | 23-10-2019 |
| | | | US 2019323879 A1 | 24-10-2019 |
| | | | WO 2018109221 A1 | 21-06-2018 |
| US 2019286284 | A1 | 19-09-2019 | AU 2015208804 A1 | 25-08-2016 |
| | | | EP 3100215 A2 | 07-12-2016 |
| | | | US 2015212661 A1 | 30-07-2015 |
| | | | US 2019286284 A1 | 19-09-2019 |
| | | | WO 2015110925 A2 | 30-07-2015 |
| EP 3566625 | A1 | 13-11-2019 | NONE | |
| US 2017035249 | A1 | 09-02-2017 | NONE | |
| US 2013309373 | A1 | 21-11-2013 | BR 112013012988 A2 | 13-09-2016 |
| | | | CN 103228189 A | 31-07-2013 |
| | | | EP 2645909 A1 | 09-10-2013 |
| | | | JP 5932826 B2 | 08-06-2016 |
| | | | JP 2013544596 A | 19-12-2013 |
| | | | RU 2013129775 A | 10-01-2015 |
| | | | US 2013309373 A1 | 21-11-2013 |
| | | | WO 2012073171 A1 | 07-06-2012 |

EPO FORM P0459

For more details about this annex : see Official Journal of the European Patent Office, No. 12/82

**EP 3 845 100 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130309373 A1